# EUROPÄISCHE PATENTSCHRIFT

(11) **EP 3 641 931 B1**
(45) Veröffentlichungstag und Bekanntmachung des Hinweises auf die Patenterteilung: **22.09.2021**
(21) Anmeldenummer: 18734765.3
(22) Anmeldetag: 18.06.2018
(51) Int. Cl.: B01J 19/26, B01J 4/00, B01F 5/02, B01J 2/02

(54) **FLUIDREAKTOR**
FLUID REACTOR
RÉACTEUR FLUIDE

(30) Priorität: 19.06.2017 DE 102017210202
(43) Veröffentlichungstag der Anmeldung: 29.04.2020
(73) Patentinhaber: leon-nanodrugs GmbH, 81679 München (DE)
(72) Erfinder: WALTER, Moriz, 88239 Wangen im Allgäu (DE); BOTT, Mario, 70178 Stuttgart (DE)
(74) Vertreter: Schrell, Andreas
(86) Internationale Anmeldenummer: PCT/EP2018/066070
(87) Internationale Veröffentlichungsnummer: WO 2018/234217

(56) Entgegenhaltungen:
- WO-A2-2014/181361
- DE-A1-102006 004 350
- US-A1- 2004 101 454
- ZHENGMING GAO ET AL: "Micromixing efficiency in a T-shaped confined impinging jet reactor", CHINESE JOURNAL OF CHEMICAL ENGINEERING, Bd. 23, Nr. 2, 2. Dezember 2014 (2014-12-02), Seiten 350-355, XP055503678, CN ISSN: 1004-9541, DOI: 10.1016/j.cjche.2014.11.024

## Beschreibung

Die Erfindung betrifft Fluidreaktoren, besonders sogenannte Impinging Jet Reaktoren, zur Erzeugung von Nanopartikeln durch Fällung aus flüssigen Medien. Die Erfindung betrifft Verfahren und Mittel für die Herstellung von Nanopartikeln mit enger Korngrößenverteilung aus einer Lösung, besonders zum Einsatz in chemischen oder pharmazeutischen Produkten.

Nanopartikel eines Stoffes oder Stoffgemisches können aus Lösungen dieses Stoffes oder Stoffgemisches oder einer Vorstufe davon durch Fällung erhalten werden, wenn die Flüssigkeit, worin der Stoff oder dessen Vorstufe gelöst ist, unter hohem Druck - und folglich hoher Geschwindigkeit - auf ein Fällungsbad trifft. Dabei kommt es zu einer Zerstäubung der Flüssigkeiten und damit zur Ausbildung des Fällungsprodukts in Form von nanopartikulären Strukturen. Eine technische Realisierung ist als "Impinging Jet"-Verfahren bekannt. Dazu werden Fluidreaktoren eingesetzt, worin die beiden Flüssigkeiten, das heißt die den zu fällenden Stoff enthaltene Flüssigkeit einerseits und die fällende Flüssigkeit andererseits, unter hohem Druck durch zwei sich gegenüber liegende Flüssigkeitsdüsen gepresst werden, sodass die beiden Flüssigkeiten als Freistrahlen in einer zwischen diesen Düsen liegenden Kollisionszone unter hoher Geschwindigkeit aufeinandertreffen. Dabei entsteht eine sogenannte "Kollisionsscheibe", welche sich aufgrund der Überlagerung der Impulse der beiden Flüssigkeiten quer zur jeweils ursprünglichen Ausbreitungsrichtung der beiden Flüssigkeiten, das heißt quer zur Strahlrichtung, ausbreitet. Am Kollisionspunkt der beiden Freistrahlen findet dabei aufgrund einer hochturbulenten Durchmischung der beiden inkompatiblen Medien eine chemische Fällungsreaktion statt, wobei gleichzeitig aufgrund der in dieser hochturbulenten Durchmischung herrschenden Scherkräfte das gefällte Produkt in Form von Nanopartikeln entsteht oder in diese unmittelbar bei Fällung zerteilt wird. Es wird angenommen, dass die Korngröße der Partikel eine Funktion des Geschwindigkeitsgradienten am Kollisionspunkt ist. Je nach Produktzusammensetzung ist die Korngröße der Partikel aber auch von Temperatur und/oder Druck im System abhängig. Es werden in der Regel Partikel, Korngröße im Bereich von 50 bis 500 µm erhalten.

Die beiden jeweils aus den sich gegenüberliegenden Düsen austretenden Freistrahlen kollidieren und erschöpfen sich vollständig in der entstehenden Kollisionsscheibe. Das in der Kollisionsscheibe vorliegende nanopartikuläre Produkt wird in dem Reaktor aufgefangen und anschließend daraus abgeführt. Dabei ist es häufig erforderlich, die Nanopartikel aus dem nanopartikulären Fluid der Kollisionsscheibe abzutrennen. Um das nanopartikuläre Fluid der Kollisionsscheibe aus dem Reaktor abzuführen, kann der Reaktor intermittierend oder kontinuierlich mit einem Spülmedium gespült werden. Der Abtransport des nanopartikulären Fluids erfolgt bekanntermaßen in Richtung der Ebene der Kollisionsscheibe, das heißt quer zur Ausrichtung der beiden kollidierenden Freistrahlen.

Zhengming Gao et al. (Chinese Journal of Chemical Engineering, 2015, Bd. 23, 350 - 355) und WO 2014/181361 A2 offenbaren speziell konfigurierte Impinging Jet-Reaktoren.

Nachteilig bei bekannten derartigen Reaktoren ist, dass die Korngrößenverteilung der erhaltenen Nanopartikel breit ist und außerdem stark von den eingesetzten Betriebsparametern, vor allem Druck und Durchflussrate, aber auch von den physikalisch-chemischen Eigenschaften der Medien, vor allem Viskosität und Oberflächenspannung, abhängt. Eine genaue Kontrolle der Betriebsparameter ist erforderlich, um reproduzierbare Ergebnisse zu erhalten. Aber bei bekannten Fluidreaktoren sind selbst unter idealen Betriebsbedingungen nur Korngrößenverteilungen erhältlich, die für einige Anwendungen unzureichend breit sind, und es sind weitere Maßnahmen zur Trennung der Korngrößen erforderlich.

Es bestand daher der Wunsch, Verfahren und Mittel zur Herstellung von Nanopartikeln mittels "Impinging Jet"-Verfahren derart weiter zu entwickeln, dass einfach, das heißt ohne enge Parameterkontrolle und zuverlässig reproduzierbar laufend Nanopartikel erhalten werden können, die vorteilhafterweise eine enge Korngrößenverteilung aufweisen.

Dieses technische Problem wird gelöst durch die Bereitstellung eines Fluidreaktors zur Erzeugung nanopartikulärer Fluide, besonders von Nanopartikeln, durch Kollision nach Anspruch 1 sowie eines Verfahrens zur Herstellung von nanopartikulärem Fluid aus in Lösungsmittel gelöster Komponente nach Anspruch 5, insbesondere durch einen Fluidreaktor, der ein Gehäuse aufweist, welches eine Kollisionskammer umschließt, wobei in die Kollisionskammer eine erste Flüssigkeitsdüse und eine dazu kollinear angeordnete, aber entgegengesetzt orientierte zweite Flüssigkeitsdüse ragen, die der ersten Flüssigkeitsdüse in Strahlrichtung der Düsen in einer gemeinsamen Kollisionszone unmittelbar gegenüberliegt. Der Reaktor weist erfindungsgemäß an dem Gehäuse mindestens einen auf der Seite der ersten Flüssigkeitsdüse angeordneten Spülfluideinsatz auf, welcher in die Kollisionskammer mündet. Der Fluidreaktor weist außerdem mindestens einen auf der Seite der zweiten Flüssigkeitsdüse angeordneten Produktauslass auf, der aus der Kollisionskammer führt.

Erfindungsgemäß ist der bereitgestellte Fluidreaktor besonders dadurch gekennzeichnet, dass auf der Seite der ersten Flüssigkeitsdüse spezifisch geformte Strukturen ausgebildet sind, welche das über den Spülfluideinlass zuführbare Spülfluid, sei es ein Gas oder eine Flüssigkeit, aufweist, wobei diese Strukturen geeignet sind, in der Kollisionskammer, zumindest im Bereich der Kollisionszone, einen in Strahlrichtung der ersten Flüssigkeitsdüse verlaufenden gerichteten, insbesondere laminaren, Spülfluidstrom zu erzeugen, wobei auf der Seite der ersten Flüssigkeitsdüse spülfluidleitende Strukturen als parallele Kanäle ausgebildet sind. Unter "gerichtetem" Strom wird hierbei ein vorzugsweise laminares Strömungsprofil verstanden, wobei das Fluid in Schichten strömt, die sich nicht vermischen und keine Wirbel ausformt. Die charakteristische Reynoldszahl Re als Funktion von Fließgeschwindigkeit, charakteristischer Länge der Reaktorgeometrie und Viskosität sollte hierzu einen Wert von Re = 2300 nicht überschreiten.

Das heißt, erfindungsgemäß ist im Betrieb des Reaktors, das heißt während der Kollision der beiden jeweils aus der ersten und zweiten Flüssigkeitsdüse austretenden Freistrahlen, ein gerichteter, insbesondere laminarer, Strom eines Spülfluids vorhanden, welcher prinzipiell parallel zur Richtung der austretenden Freistrahlen verläuft, das heißt im Wesentlichen orthogonal zur entstehenden Kollisionsscheibe. Dadurch wird erfindungsgemäß erreicht, dass die Kollisionsscheibe in ihrer Ausbreitung in Richtung des gerichteten Nettostroms des Spülfluids abgelenkt wird.

Das heißt besonders, die sich ursprünglich im Wesentlichen senkrecht zur Ausbreitungsrichtung der Freistrahlen ausbildende flache Kollisionsscheibe wird praktisch pilzförmig, das heißt bevorzugt in Form einer Kalotte oder eines Rotationsparaboloiden abgelenkt. Die konkrete Form des sich mit der Ablenkung durch das gerichtet, insbesondere laminar strömende Spülfluid ausbildenden Kollisionskegels ist in erster Näherung durch die Vektoraddition der Ausbreitungsgeschwindigkeit des nanopartikulären Fluids von der Kollisionszone einerseits und von dem Profil des gerichteten Spülfluids andererseits gegeben.

Dadurch wird vorteilhafterweise erreicht, dass die in dem gebildeten nanopartikulären Fluid der Kollisionsscheibe vorhandenen Partikel von der Kollisionszone und damit vorteilhafterweise besonders auch von den kollidierenden Freistrahlen sicher und zuverlässig weggefördert werden, wodurch die Wahrscheinlichkeit, dass bereits gebildete Partikel zurück in die Kollisionszone oder in die Freistrahlen prallen, signifikant reduziert wird.

Es hat sich überraschend gezeigt, dass durch diese Verfahrens- und Betriebsbedingung, die sich aus der besonderen baulichen Gestaltung des erfindungsgemäßen Fluidreaktors zwangsweise ergibt, das Verfahrensergebnis, nämlich die Herstellung von Nanopartikeln signifikant verbessern lässt. Zum einen sind Qualität und insbesondere Größenverteilung der Nanopartikel weniger stark von den gewählten Betriebs- und Prozessparametern abhängig, sodass zuverlässiger und reproduzierbarer nanopartikuläre Produkte erhalten werden können. Zum anderen hat sich überraschend gezeigt, dass dadurch die Korngrößenverteilung der erhältlichen Nanopartikel gegenüber der mit bekannten Verfahren herstellbaren Nanopartikel deutlich verbessert, das heißt verringert hat.

Unter "kollinear" wird im Zusammenhang mit der Erfindung nicht nur ein Winkel von 0° (bei gleichgerichteter Orientierung) beziehungsweise 180° (bei entgegengesetzter Orientierung) verstanden, sondern "kollinear" umfasst auch praktisch erwägbare Abweichungen von diesem Interaktionswinkel. Der Begriff "kollinear" schließt daher bevorzugt Interaktionswinkel von -10° bis +10°, das heißt 170° bis 190° mit ein.

Unter "kollinear" wird im Zusammenhang mit der Erfindung weiterhin nicht nur verstanden, dass die beiden interagierenden Strahlen, beziehungsweise Düsenausrichtungen fluchten oder in einer gemeinsamen Achse verlaufen, sondern "kollinear" umfasst auch praktisch erwägbare Abweichungen in Form von seitlichem Versatz der Strahlen, beziehungsweise Düsenachsen. Idealerweise ist eine Überlappung der Strahlen von 100% vorgesehen, das heißt besonders, die Strahlen beziehungsweise Düsenachsen fluchten. Der Begriff "kollinear" schließt aber bevorzugt auch Überlappungen von 50% oder mehr, bevorzugt von 70% oder mehr, mit ein. Der notwendige Grad der Überlappung ist auch vom Strahlprofil der aus den Düsen austretenden Freistrahlen abhängig. Der Fachmann kennt die entsprechenden Zusammenhänge.

Nachfolgend werden besondere Ausgestaltungen des erfindungsgemäßen Fluidreaktors beschrieben, die jeweils den erfindungsgemäßen vorteilhaften Betrieb des Reaktors zusätzlich unterstützen, und insbesondere geeignet sind, das Rückprallen von gebildeten Nanopartikeln in der Kollisionszone und damit auch in die Freistrahlen zu verhindern.

In einer bevorzugten Ausgestaltung ist in der Kollisionskammer des Fluidreaktors, zumindest auf der Seite der zweiten Flüssigkeitsdüse, wohin die Kollisionsscheibe aufgrund des erzeugbaren gerichteten, insbesondere laminaren, Spülfluidstroms ablenkbar ist, eine strukturierte Prallwand vorgesehen. Diese strukturierte Prallwand ist derart ausgebildet, dass der Impuls dort auftreffender Partikel aus den gebildeten nanopartikulären Fluid gestreut und/oder gedämpft wird, sodass insbesondere ein elastisches Rückprallen der Partikel in die Kollisionskammer und ungünstigstenfalls in die Kollisionszone oder die Freistrahlen verhindert wird. Dazu ist die Prallwand bevorzugt strukturiert, um die aufprallenden Fluidtropfen zu brechen. Bevorzugt sind offenporige oder schwammartige Strukturen, bevorzugt gesinterte Strukturen, Metall-, Glas- oder Keramikschwämme oder-fritten.

In bevorzugten Ausgestaltungen sind die spülfluidleitenden Strukturen in dem Fluidreaktor, welche zur Ausbildung eines gerichteten, insbesondere laminaren, und insbesondere zur Strömungsrichtung der aus den Düsen austretenden Freistrahlen parallelen Strömung des Spülfluids als strukturierte Kämme oder ähnliche Strukturen ausgebildet, welche die Bildung von Turbulenzen eines in den Kollisionsraum eingeleiteten Spülfluids unterdrücken und die Strömung des Spülfluids lenken. In einer bevorzugten Variante sind die Strukturen als parallele Kanäle oder Rillen ausgebildet. Diese sind bevorzugt konzentrisch um die mittig verlaufende erste Flüssigkeitsdüse angeordnet. In einer bevorzugten Ausgestaltung münden diese Kanäle in der Nähe der Spitze der ersten Flüssigkeitsdüse, wo der Freistrahl des ersten Mediums austritt, in die Kollisionszone, sodass zumindest im Bereich der Kollisionszone eine gerichtete, insbesondere laminare, Strömung eines eingeleiteten Spülfluids ausbildbar ist.

Als spülfluidleitende Struktur ist zumindest im Bereiches des Kopfes der ersten Flüssigkeitsdüse an dem Gehäuse, besonders an der Wand der Kollisionskammer, ein Vorsprung derart ausgebildet, dass dieser der mittigen ersten Flüssigkeitsdüse einen um diese Flüssigkeitsdüse herum konzentrisch angeordneten und konisch zulaufenden ersten Fluidleitraum in der Kollisionskammer bildet. Es ist vorgesehen, dass in diesem bevorzugt gebildeten Fluidleitraum die gerichtete Strömung eines eingeleiteten Spülfluids direkt auf die Austrittsöffnung des Freistrahls des ersten Mediums aus der ersten Flüssigkeitsdüse gerichtet wird. Somit wird erreicht, dass das Spülfluid eng an dem Schaft der ersten Flüssigkeitsdüse und an der Spitze der ersten Flüssigkeitsdüse entlangströmt und den dort austretenden Freistrahl des ersten Mediums koaxial umhüllt. Ohne an die Theorie gebunden sein zu wollen, reißt der austretende Freistrahl so den Spülfluidstrom nach dem Prinzip einer Venturidüse mit, beschleunigt diesen und lenkt diesen unmittelbar und in Richtung des Freistrahls senkrecht auf die entstehende Kollisionsscheibe, die dabei unmittelbar quer zu ihrer Ausbreitungsrichtung von dem Spülmedium abgelenkt werden kann.

In einer zusätzlichen bevorzugten Ausgestaltung ist auch im Bereich des Kopfes der zweiten Flüssigkeitsdüse, besonders an der Wand der Kollisionskammer, ein Vorsprung ausgebildet, der im Bereich des Kopfes der zweiten Flüssigkeitsdüse einen um die Flüssigkeitsdüse herum konzentrisch angeordneten und bevorzugt konisch auslaufenden zweiten Fluidleitraum in der Kollisionskammer bildet. Der zweite Fluidleitraum ist dabei so dimensioniert, dass er der durch das Spülmedium abgelenkten Kollisionsscheibe folgt. Dabei ist besonders vorgesehen, dass sich der zweite Fluidleitraum in Ausbreitungsrichtung der abgelenkten Kollisionsscheibe erweitert, sodass bevorzugt ein Druckabfall und eine Geschwindigkeitsreduzierung des gebildeten und abströmenden nanopartikulären Fluids ermöglicht wird. Durch diese Maßnahme wird zusätzlich verhindert, dass Partikel aus dem gebildeten nanopartikulären Fluid ihren Weg zurück zum Punkt ihrer Entstehung, das heißt zu der Kollisionszone oder auch zu den Freistrahlen finden können.

Durch diese Maßnahmen wird erreicht oder unterstützt, dass das erfindungsgemäß die Kollisionsscheibe ablenkende Spülfluid an der Kollisionszone im Wesentlichen senkrecht auf die Kollisionsscheibe trifft, diese in Ausbreitungsrichtung der Kollisionsscheibe, das heißt in Flussrichtung des in der Kollisionszone gebildeten nanopartikulären Fluids, entlang der Strömungsrichtung des Spülfluids orientiert, das heißt die Strömungsrichtung des gebildeten nanopartikulären Fluids in die Strömungsrichtung des Spülfluids einschwenkt, sodass diese erfindungsgemäß schließlich parallel verlaufen, wodurch das Spülfluid nun die Abfuhr der gebildeten Nanopartikel aus dem Reaktor unmittelbar unterstützt. Dabei ist bevorzugt vorgesehen, dass die Dimensionierung der vorgenannten Strukturen so auf die möglichen Betriebsparameter abgestimmt ist, sodass Druck- und Strömungsverhältnisse erreichbar sind, die eine kontinuierliche Ablenkung der Kollisionsscheibe erzwingen. Das heißt besonders, dass die erfindungsgemäß abgelenkte und zu einem Kollisionskegel verformte Kollisionsscheibe im Längsschnitt eine streng monoton fallende Funktion beschreibt. Das heißt an keiner Stelle der abgelenkten Kollisionsscheibe strömen gebildete Nanopartikel entgegen ihrer primären Nettoflussrichtung oder gar zurück in Richtung der Freistrahlen oder zur Kollisionszone.

Der Durchmesser der Düsen beträgt bevorzugt von 50 bis 500 µm, besonders von 100 bis 500 µm, bevorzugt von 200 bis 400 µm, in einer spezifischen Variante etwa 300 µm.

Die Erfindung betrifft auch ein Verfahren zur Herstellung von nanopartikulärem Fluid, das heißt Nanopartikeln aus in Lösungsmittel gelöster Komponente oder Komponentengemisch. Das Verfahren beinhaltet, dass ein erstes flüssiges Medium, das heißt das Medium worin die Komponente, woraus die Nanopartikel gebildet werden sollen, gelöst ist, durch eine erste Flüssigkeitsdüse gepresst wird und dort unter hoher Geschwindigkeit austritt und dass zusätzlich ein zweites flüssiges Medium, welches Fällungsmittel zur Fällung der in dem ersten flüssigen Medium gelösten Komponente enthält, durch eine zweite Flüssigkeitsdüse gepresst wird, welche zu der ersten Flüssigkeitsdüse kollinear angeordnet, aber entgegengesetzt orientiert ist, wobei die zweite Flüssigkeitsdüse der ersten Flüssigkeitsdüse unmittelbar gegenübersteht, sodass in dem Verfahrensschritt die beiden aus den Düsen austretenden Freistrahlen des ersten und zweiten flüssigen Mediums mit derart hoher Geschwindigkeit in einer gemeinsamen Kollisionszone aufeinanderprallen, dass die in dem ersten Medium gelöste Komponente durch das Fällungsmittel gefällt wird und, besonders gleichzeitig, eine sich von dem Kollisionspunkt aus quer zur Strahlrichtung der Düsen erstreckende Kollisionsscheibe, enthaltend die gefällte Komponente als nanopartikuläres Fluid, gebildet wird. Erfindungsgemäß ist das Verfahren nun dadurch gekennzeichnet, dass ein zur Strahlrichtung der Düsen, beziehungsweise der Freistrahlen im Wesentlichen paralleler gerichteter Spülfluidstrom erzeugt wird, so dass durch den Spülfluidstrom die sich bildende Kollisionsscheibe quer zur ihrer primären Ausbreitungsrichtung abgelenkt und ein Kollisionskegel gebildet wird.

Bevorzugt sieht das Verfahren vor, dass der hierin beschriebene, besonders ausgestaltete Fluidreaktor eingesetzt wird.

Bevorzugt ist vorgesehen, dass der Spülfluidstrom das gebildete nanopartikuläre Fluid in Stahlrichtung der Düsen beziehungsweise der Freistrahlen aus der Kollisionszone fördert. Bevorzugt ist vorgesehen, dass der Spülfluidstrom das nanopartikuläre Fluid in einen Fluidraum fördert, der ein Rückprallen von gebildeten Partikeln in die Kollisionszone vermeidet oder verhindert. Der Fluidraum ist bevorzugt als Expansionsraum ausgebildet.

Alternativ oder zusätzlich ist bevorzugt vorgesehen, dass der Spülfluidstrom das gebildete nanopartikuläre Fluid in Strahlrichtung der Düsen aus der Kollisionszone fördert und auf eine strukturierte Prallwand, die ein Rückprallen von gebildeten Partikeln in der Kollisionszone vermeidet oder verhindert, lenkt.

Besonders im Zusammenspiel mit der Dimensionierung des verwendeten Fluidreaktors sieht das Verfahren bevorzugt vor, dass der Volumenstrom und gegebenenfalls die Dichte des Spülfluidstroms an den Volumenstrom und die Dichten des ersten und zweiten flüssigen Mediums angepasst ist, sodass sich ein kontinuierliches Fließgleichgewicht der Volumenströme einstellt, die eine derartige Geometrie ausbilden, das ein Rückströmen von Medien oder gebildeten Partikeln in die Kollisionszone oder in die Freistrahlen verhindert wird.

Der Flüssigkeitsvolumenstrom an der Flüssigkeitsdüse beträgt bevorzugt von 100 bis 1000 ml/min, besonders von 125 bis 500 ml/min, bevorzugt von 200 bis 300 ml/min, in einer spezifischen Variante etwa 250 ml/min. Der Düsendurchmesser beträgt dabei bevorzugt etwa 300 µm.

Der Gasvolumenstrom des Spülfluids beträgt bevorzugt von 1 bis 20 l/min, besonders von 1 bis 10 l/min, bevorzugt von 3 bis 8 l/min, in einer spezifischen Variante etwa 5 l/min.

Bevorzugt ist vorgesehen, dass das Verfahren ein Spülfluid verwendet, welches ein Inertgas oder ein inertes Gasgemisch ist. In einer alternativen Ausgestaltung ist das Spülfluid eine Flüssigkeit. Diese Flüssigkeit ist bevorzugt weniger dicht als die zur Kollision und Fällung der Partikel eingesetzten ersten und zweiten flüssigen Medien, besonders bevorzugt weniger dicht als das erste flüssige Medium, welches die zu fällende Komponente enthält.

Die Erfindung wird an den nachfolgenden Beispielen näher erläutert, ohne dass diese beschränkend zu verstehen wären:

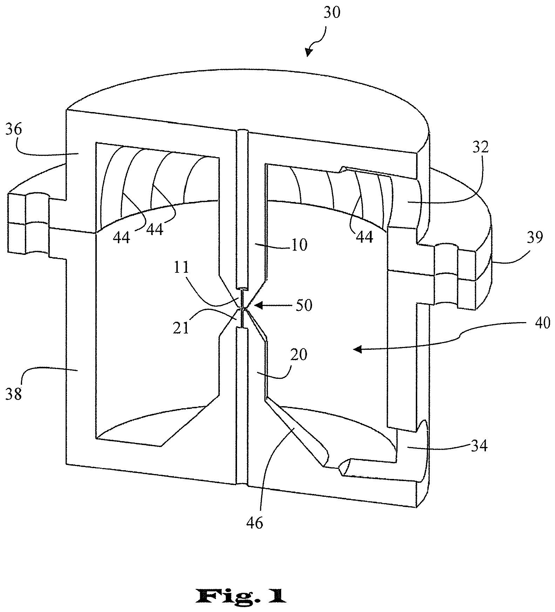

Figur 1 zeigt schematisch das Funktionsprinzip anhand der schematischen Schnittansicht eines erfindungsgemäßen Fluidreaktors. Dieser ist in der dargestellten Version zweiteilig ausgebildet, wobei ein der ersten Düse 10 zugeordneter Gehäuseteil 36 über einen Flansch 39 mit dem der zweiten Düse 20 zugeordneten zweiten Gehäuseteil 38 dichtend verbindbar ist. Dabei sind die in den von dem Gehäuse 30 umschlossenen Kollisionsraum 40 zwei gegeneinander gerichtete und kollinear angeordnete Flüssigkeitsdüsen 10, 20 derart angeordnet, dass sie sich in einer gemeinsamen Kollisionszone 50 unmittelbar gegenüberstehen, sodass aus dem Düsenkopf 11 einerseits und dem Düsenkopf 21 andererseits austretende Freistrahlen dort kollidieren. Erfindungsgemäß ist zumindest im Bereich der ersten Düse 10 eine fluidleitende Struktur 44 ausgebildet. Diese ist derart strukturiert, dass ein in den Spülfluideinlass 32 eingeleitetes Spülfluid durch die strömungsleitenden Strukturen 44 so abgelenkt werden, dass sich ein gerichteter Strom des Spülfluids entlang der Strömungsrichtung der Flüssigkeitsdüsen 10, 20 ausbildet, und zwar zumindest im Bereich der Kollisionszone 50. Das Spülfluid kann zusammen mit einem in der Kollisionszone 50 gebildeten nanopartikulären Fluid aus der Kollisionskammer 40 an den Auslass 34 entnommen werden. In der dargestellten Ausführung ist zusätzlich innerhalb der Kollisionskammer, zumindest in dem der zweiten Düse 20 zugeordneten Bereich eine strukturierte Prallwand 46 vorgesehen.

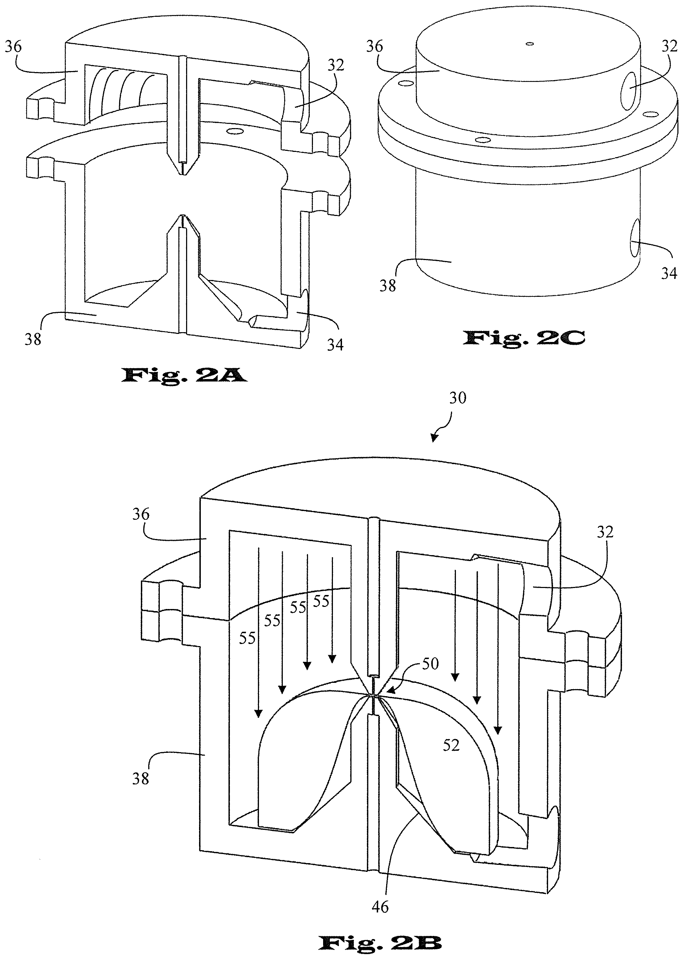

Die Figur 2A zeigt die Ausführung nach Figur 1 in geöffnetem Zustand. Die Figur 2C zeigt eine Außenansicht des Reaktors nach Figur 1 in geschlossenem Zustand. Die Figur 2B zeigt in schematischer Darstellung den Betriebszustand des Fluidreaktors nach Figur 1, wobei ein sich in dem Fluidreaktor ausbildender gerichteter Gasstrom 55 eine sich in der Kollisionszone 50 zwischen den Düsen ausbildende Kollisionsscheibe 52 in Strömungsrichtung der ersten Düse ablenkt, sodass das nanopartikuläre Fluid aus der Kollisionsscheibe 52 auf die Prallwand 46 trifft und zum anderen letztlich über den Auslass 34 zusammen mit dem Spülfluid aus dem Fluidreaktor ausgeleitet werden kann. Die Kollisionszone 50 befindet sich unterhalb der Ebene des Flansches 39 zwischen den beiden Gehäusehälften 32,34. Die Kollisionsscheibe 52 bildet sich in dem Reaktor unterhalb des Flansches 39. So können Ablagerungen an dem Flansch vermieden und Risiken einer Kontamination des nanopartikulären Fluids an der Flanschdichtung minimiert werden.

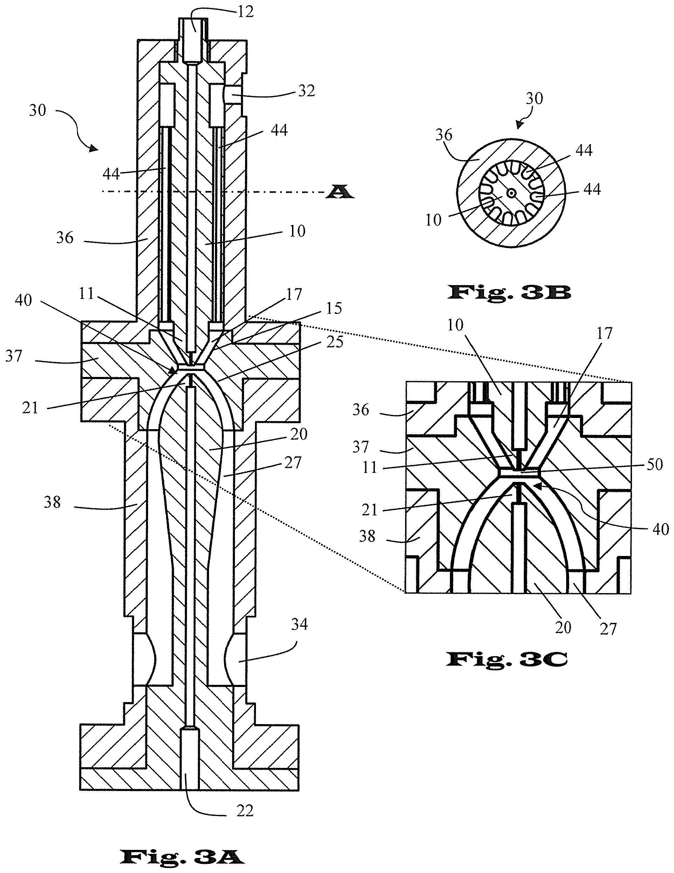

Die Figur 3A zeigt einen Querschnitt durch eine bevorzugte Ausgestaltung eines erfindungsgemäßen Fluidreaktors. Es ist eine dreiteilige Ausführung gewählt, wobei der obere, der ersten Düse 10 zugeordnete Gehäuseabschnitt 36 mit dem unteren, der zweiten Düse 20 zugeordneten Gehäuseteil 38 über eine Zwischenscheibe 37 im Bereich der Kollisionszone dichtend verbindet. In der dargestellten Ausführung sind die Düsenkörper der Düsen 10, 20 in die Gehäuseteile 36, 38 separat eingesetzt.
   Die erste Düse 10 ist über einen Zulauf 12 mit einer Hochdruckpumpe verbindbar. Die Düse 20 ist über einen Zulauf 22 mit einer zweiten Hochdruckpumpe verbindbar. In dem Gehäuseteil 36 ist mindestens ein Zulauf 32 für Spülmedium ausgebildet. In dem Gehäuseteil 38 ist zumindest ein Ablauf 34 für gebildetes nanopartikuläres Fluid und Spülfluid ausgebildet. Die Figur 3B zeigt einen Querschnitt durch den Gehäuseteil 36 der Figur 3A im Bereich der Schnittlinie A. Innerhalb der Wand des Gehäuses 30 ist die Düse 10 eingesetzt, deren Schaft zur Gehäusewand hin parallele und konzentrisch um die Düse angeordnete Kanäle 44 bildet, die als strömungsleitende Strukturen dienen und einen gerichteten Strom von Spülfluid entlang der Düse 10 hin zu deren Spitze 11 erlauben.
Die Figur 3C zeigt einen Detailausschnitt der Ausführung nach Figur 3A im Bereich der Kollisionszone 50. An der Spitze 11 der ersten Düse münden die strömungsleitenden Kanäle 44 in einen fluidleitenden Bereich 17, welcher durch die Spitze der ersten Düse und einem Vorsprung 15 der Gehäusewand gebildet wird in Strömungsrichtung unterhalb der Kollisionszone 50 bildet die Spitze 21 der zweiten Düse mit dem Vorsprung 25 des Gehäuses einen zweiten Fluidleitraum 27, welcher eine an der Kollisionszone 50 gebildete Kollisionsscheibe ausgebildetem nanopartikulären Fluid aufnimmt und zusammen mit einem durchströmenden Spülfluid abführt.

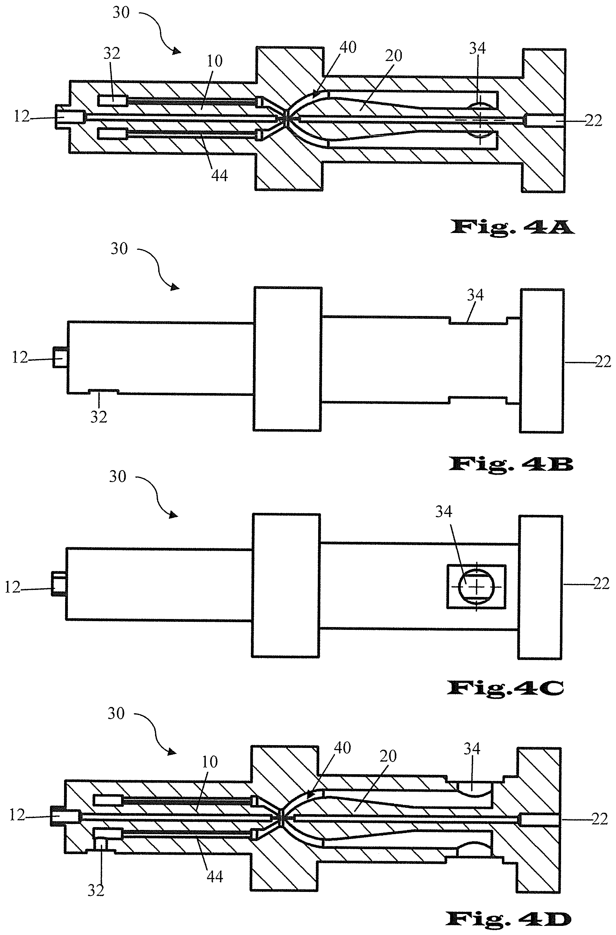

Die Figuren 4A bis 4D zeigen schematische Längsschnittansichten beziehungsweise Seitenansichten einer weiteren bevorzugten Ausführungsform des erfindungsgemäßen Fluidreaktors. Die Figur 4A zeigt eine Schnittansicht, die Figur 4C die Außenansicht der entsprechenden Orientierung. Die Figur 4D zeigt eine Schnittansicht der Ausführung nach Figur 4A mit dazu senkrecht stehender Schnittebene. Die Figur 4B zeigt die zugehörige Außenansicht der entsprechend orientierten Ausführung.

## Patentansprüche

1. Fluidreaktor zur Erzeugung nanopartikulärer Fluide durch Kollision, umfassend ein Gehäuse (30), das eine Kollisionskammer (40) umschließt, eine erste Flüssigkeitsdüse (10) und eine dazu kollineare, entgegengesetzt orientierte zweite Flüssigkeitsdüse (20), die der ersten Flüssigkeitsdüse (10) in Strahlrichtung der Flüssigkeitsdüsen (10,20) in einer gemeinsamen Kollisionszone (50) unmittelbar gegenüber liegt, mindestens einen auf der Seite (36) der ersten Flüssigkeitsdüse (10) angeordneten Spülfluideinlass (32) in die Kollisionskammer (40) und mindestens einen auf der Seite (38) der zweiten Flüssigkeitsdüse (20) angeordneten Produktauslass (34) aus der Kollisionskammer (40), **dadurch gekennzeichnet, dass** auf der Seite (36) der ersten Flüssigkeitsdüse (10) spülfluidleitende Strukturen (44) als parallele Kanäle ausgebildet sind, die spezifisch ausgebildet sind, in der Kollisionskammer (40) im Bereich der Kollisionszone (50) einen parallel zur Strahlrichtung der ersten Flüssigkeitsdüse (10) verlaufenden, gerichteten Spülfluidstrom (55) zu erzeugen, wobei im Bereich des Kopfes (11) der ersten Flüssigkeitsdüse (10) ein Vorsprung (15) ausgebildet ist, der einen um die Flüssigkeitsdüse (10) konzentrisch angeordneten konisch zulaufenden ersten Fluidleitraum (17) in der Kollisionskammer (40) bildet.

2. Fluidreaktor nach Anspruch 1, wobei in der Kollisionskammer (40) auf der Seite (38) der zweiten Flüssigkeitsdüse (20) eine offenporig strukturierte Prallwand (46) ausgebildet ist.

3. Fluidreaktor nach einem der vorstehenden Ansprüche, wobei ein Vorsprung (25) ausgebildet ist, der im Bereich des Kopfes (21) der zweiten Flüssigkeitsdüse (20) einen um die Flüssigkeitsdüse (20) konzentrisch angeordneten, konisch auslaufenden, zweiten Fluidleitraum (27) in der Kollisionskammer (40) bildet.

4. Fluidreaktor nach einem der vorstehenden Ansprüche, wobei sich der Schaft der zweiten Flüssigkeitsdüse (20) von dem Kopf (21) der Flüssigkeitsdüse (20) zu ihrer Basis hin verjüngt und so zwischen Flüssigkeitsdüse (20) und der Wand der Kollisionskammer (40) ein Fluidexpansionsraum gebildet ist.

5. Verfahren zur Herstellung von nanopartikulärem Fluid aus in Lösungsmittel gelöster Komponente, enthaltend die Schritte: Pressen eines ersten flüssigen Mediums mit darin gelöster Komponente durch eine erste Flüssigkeitsdüse (10) im Bereich deren Kopfes (11) ein Vorsprung (15) ausgebildet ist, der einen um die Flüssigkeitsdüse (10) konzentrisch angeordneten konisch zulaufenden ersten Fluidleitraum (17) in einer Kollisionskammer (40) bildet, und Pressen eines zweiten flüssigen Mediums enthaltend Fällungsmittel durch eine kollineare, entgegengesetzt orientierte zweite Flüssigkeitsdüse (20), die der ersten Flüssigkeitsdüse (10) unmittelbar gegenübersteht, so dass die beiden aus den Düsen (10,20) austretenden Freistrahlen mit derart hoher Geschwindigkeit in einer Kollisionszone (50) aufeinanderprallen, dass die in dem ersten Medium gelöste Komponente durch das Fällungsmittel gefällt wird und eine sich von der Kollisionszone (50) aus quer zur Strahlrichtung der Düsen (10,20) erstreckende Kollisionsscheibe (52) der gefällten Komponente als nanopartikuläres Fluid gebildet wird, **dadurch gekennzeichnet, dass** ein zur Strahlrichtung der Düsen (10,20) paralleler gerichteter Spülfluidstrom (55) die sich bildende Kollisionsscheibe (52) aus nanopartikulärem Fluid in Richtung des Spülfluidstroms (55) ablenkt und der Spülfluidstrom (55) das gebildete nanopartikuläre Fluid in Strahlrichtung der Düsen (10,20) aus der Kollisionszone in einen Fluidexpansionsraum fördert, wobei das nanopartikuläre Fluid aus dem Spülfluidstrom (55) gewonnen wird.

## Claims

1. Fluid reactor for generating nanoparticulate fluids by collision, comprising a housing (30) which encloses a collision chamber (40), a first fluid nozzle (10), and a second fluid nozzle (20) collinear, oppositely oriented thereto, which is located directly opposite the first fluid nozzle (10) in the jet direction of the fluid nozzles (10, 20) in a common collision zone (50), at least one rinsing fluid inlet (32) into the collision chamber (40) arranged on the side (36) of the first fluid nozzle (10), and at least one product outlet (34) out of the collision chamber (40) arranged on the side (38) of the second fluid nozzle (20), **characterized in that** rinsing-fluid-conducting structures (44) are designed as parallel channels on the side (36) of the first fluid nozzle (10), which are specifically formed in the collision chamber (40), in the area of the collision zone (50), to produce a rinsing fluid flow (55) directed in the jet direction of the first fluid nozzle (10), wherein, in the area of the head (11) of the first fluid nozzle (10), a projection (15) is formed, which forms a concentrically arranged tapered first fluid conducting space (17) in the collision chamber (40) around the fluid nozzle (10).

2. Fluid reactor according to claim 1, wherein, in the collision chamber (40) on the side (38) of the second fluid nozzle (20), an open-pored structured impact wall (46) is formed.

3. Fluid reactor according to anyone of the preceding claims, wherein a projection (25) is formed, which forms, in the area of the head (21) of the second fluid nozzle (20), a concentrically arranged tapered second fluid conducting space (27) in the collision chamber (40) around the fluid nozzle (20).

4. Fluid reactor according to anyone of the preceding claims, wherein the shaft of the second fluid nozzle (20) tapers from the head (21) of the fluid nozzle (20) towards its base, and a fluid expansion space is thus formed between the fluid nozzle (20) and the wall of the collision chamber (40).

5. Method for the preparation of nanoparticulate fluid from components dissolved in a solvent, comprising the steps of: pressing a first fluid medium having components dissolved therein through a first fluid nozzle (10) in the region of the head (11) of which a projection (15) is formed, which creates a concentrically arranged tapered first fluid conducting space (17) in a collision chamber (40) around the fluid nozzle (10), and pressing a second fluid medium containing precipitating agent through a collinear, oppositely oriented second fluid nozzle (20) immediately opposite the first fluid nozzle (10) in such a manner that the two free jets emerging from the nozzles (10, 20) collide with one another in a collision zone (50) at such a high speed that the component dissolved in the first medium is precipitated by the precipitating agent, and a collision disk (52) of the precipitated component extending from the collision zone (50) transversely to the jet direction of the nozzles (10, 20) is formed as a nanoparticulate fluid, **characterized in that** a rinsing fluid flow (55) that is directed parallel to the jet direction of the nozzles (10, 20) deflects the forming collision disk (52) of nanoparticulate fluid in the direction of rinsing fluid flow (55), and the rinsing fluid flow (55) conveys the formed nanoparticulate fluid in jet direction of the nozzles (10, 20) out of the collision zone into a fluid expansion space, wherein the nanoparticulate fluid is recovered from the rinsing fluid flow (55).

## Revendications

1. Réacteur à fluide destiné à produire des fluides nanoparticulaires par collision, comprenant un boîtier (30) qui enceint une chambre de collision (40), un premier injecteur (10) de liquide et un deuxième injecteur de liquide (20) colinéaire et orienté de manière opposée par rapport à ce dernier, qui fait directement face au premier injecteur de liquide (10) dans la direction du jet des injecteurs de liquide (10, 20) dans une zone de collision (50) commune, au moins une entrée de fluide de rinçage (32) vers la chambre de collision (40) disposée sur le côté (36) du premier injecteur de liquide (10) et au moins une sortie de produit (34) de la chambre de collision (40) disposée sur le côté (38) du deuxième injecteur de liquide (20), **caractérisé en ce que** des structures conductrices de fluide de rinçage (44) sont réalisées comme conduits parallèles sur le côté (36) du premier injecteur de liquide (10), lesquelles sont spécifiquement réalisées pour produire dans la chambre de collision (40) au niveau de la zone de collision (50) un courant de fluide de rinçage (55) dirigé et parallèle à la direction du jet du premier injecteur de liquide (10), dans lequel une saillie (15) est réalisée au niveau de la tête (11) du premier injecteur de liquide (10), laquelle forme dans la chambre de collision (40) un premier espace conducteur de fluide (17) se terminant en cône et disposé de manière concentrique autour de l'injecteur (10) de liquide.

2. Réacteur à fluide selon la revendication 1, dans lequel une chicane (46) structurée avec des pores ouverts est réalisée sur le côté (38) du deuxième injecteur de liquide (20) dans la chambre de collision (40).

3. Réacteur à fluide selon l'une des revendications précédentes, dans lequel une saillie (25) est réalisée, laquelle forme au niveau de la tête (21) du deuxième injecteur de liquide (20) un deuxième espace conducteur de fluide (27) se terminant en cône et disposé de manière concentrique autour de l'injecteur (20) de liquide dans la chambre de collision (40).

4. Réacteur à fluide selon l'une des revendications précédentes, dans lequel la tige du deuxième injecteur de liquide (20) se rétrécit depuis la tête (21) de l'injecteur (20) de liquide jusqu'à sa base et un espace d'expansion du fluide est ainsi formé entre l'injecteur (20) de liquide et la paroi de la chambre de collision (40).

5. Procédé de préparation de fluide nanoparticulaire à partir d'un composant dissous dans un solvant, comprenant les étapes de : pressage d'un premier milieu liquide avec des composants dissous dans celui-ci à travers un premier injecteur de liquide (10), une saillie (15) étant réalisée au niveau de la tête (11) de celui-ci, laquelle saillie forme dans une chambre de collision (40) un premier espace conducteur de fluide (17) se terminant en cône et disposé de manière concentrique autour de l'injecteur (10) de liquide, et pressage d'un deuxième milieu liquide contenant un agent précipitant à travers un deuxième injecteur de liquide (20) colinéaire et orienté de manière opposée, directement en face du premier injecteur de liquide (10), de sorte que les deux jets libres sortant des injecteurs de liquide (10, 20) entrent en collision dans une zone de collision (50) avec une vitesse élevée telle que le composant dissous dans le premier milieu est précipité par l'agent précipitant et un disque de collision (52) du composant précipité s'étendant depuis la zone de collision (50) transversalement à la direction de jet des injecteurs (10, 20) est formé en tant que fluide nanoparticulaire, **caractérisé en ce qu'**un courant de fluide de rinçage (55) dirigé et parallèle à la direction du jet des injecteurs (10, 20) dévie le disque de collision (52) en formation, fait de fluide nanoparticulaire, dans la direction du courant de fluide de rinçage (55) et le courant de fluide de rinçage (55) refoule le fluide nanoparticulaire formé dans la direction du jet des injecteurs (10, 20), hors de la zone de collision dans un espace d'expansion du fluide, le fluide nanoparticulaire étant récupéré à partir du courant de fluide de rinçage (55).
